Europäisches Patentamt

European Patent Office

Office européen des brevets

(11) Veröffentlichungsnummer: **0 218 780**
**A1**

(12) **EUROPÄISCHE PATENTANMELDUNG**

(21) Anmeldenummer: 86105563.0

(22) Anmeldetag: 22.04.86

(51) Int. Cl.⁴: **A47K 11/02**

(30) Priorität: 05.12.85 DE 3543081
28.09.85 DE 3534745

(43) Veröffentlichungstag der Anmeldung:
**22.04.87 Patentblatt 87/17**

(84) Benannte Vertragsstaaten:
**AT BE CH DE FR GB IT LI LU NL SE**

(71) Anmelder: **Garich, Norbert**
**Zedernweg 17**
**D-5603 Wülfrath(DE)**

(72) Erfinder: **Garich, Norbert**
**Zedernweg 17**
**D-5603 Wülfrath(DE)**

(74) Vertreter: **Becker, Thomas, Dr., Dipl.-Ing. et al**
**Patentanwälte Becker & Pust**
**Eisenhüttenstrasse 2**
**D-4030 Ratingen 1(DE)**

(54) **Mobile Toilette.**

㉗ Die Erfindung betrifft eine Toilettenbox, die aus einem Auffangbehälter (10), einem diesen verschließenden Deckel (12) mit einer Öffnung (16) sowie einer weiteren Kappe (14) besteht, die zum Verschließen der Öffnung (16) im Deckel (12) dient.

Fig. 1

## Mobile Toilette

Die Erfindung betrifft eine mobile Toilette.

In den letzten Jahren sind zunehmend mobile Toilettenanlagen bekanntgeworden, die auf Baustellen, Jahr-und Weihnachtsmärkten, Schützenfesten usw. eingesetzt werden. Diese Toilettenanlagen sind in Form einer mit einer Tür versehen, in sich geschlossenen Kabine ausgebildet und mit einem darin angeordneten Fäkalienbehälter ausgerüstet, welcher von einer einen Sitz aufweisenden Platte abgedeckt ist. (DE-GM 81 14 168)

Derartige Toilettenanlagen sind aber nur dort einsetzbar, wo ausreichend Platz zur Verfügung steht. Dementsprechend werden die bekannten Toilettenanlagen ausschließlich im Außenbereich eingesetzt.

Daneben gibt es aber auch einen erheblichen Bedarf an Toilettenanlagen, für die weniger Raum zur Verfügung steht, zum Beispiel in Campingwagen, Reisebussen oder Flugzeugen.

Diese Toiletten bestehen in der Regel aus einem einstückigen Auffangbehälter, der eine mit einem Toilettensitz versehene Mittenöffnung aufweist. Der Auffangbehälter ist wiederum auf etwa der Hälfte seiner Bauhöhe mit einer horizontalen Zwischendecke ausgerüstet, die eine mit der vom Toilettensitz umgriffenen Mittenöffnung fluchtende Öffnung aufweist, die über einen Schieberverschluß zu öffnen und zu verschließen ist. Der Auffangbehälter selbst ist fest an der Fahrzeugwand befestigt oder zum Teil auch integral mit dieser ausgebildet. Über am Boden des Auffangbehälters angeordnete Absaugstutzen kann der Auffangbehälter entleert werden. Eine Reinigung des Auffangbehälters ist nur über die obere Mittenöffnung möglich, was nicht unerhebliche Schwierigkeiten mit sich bringt. So ist beispielsweise eine Reinigung aufgrund der beengten Verhältnisse in derartigen Fahrzeugen/Verkehrsmitteln sehr schwierig und häufig unhygienisch.

Der Erfindung liegt insoweit die Aufgabe zugrunde, eine mobile Toilette anzubieten, die leicht transportierbar und auch unter extremen räumlichen Bedingungen einsetzbar ist, die ohne weiteres einer schnellen, einfachen und hygienischen Reinigung zugänglich ist, und die im übrigen sämtlichen hygienischen Anforderungen bekannter mobiler Toilettenanlagen der vorstehend genannten Art entspricht.

Dabei soll die mobile Toilette derart gestaltet sein, daß sie auch neuen Anwendungsbereichen zugänglich wird, wo bisher nur völlig unbefriedigende sanitäre Einrichtungen zur Verfügung stehen, zum Beispiel im Bergbau.

Hygienische Toilettenanlagen sind auch heute noch im Bergbau weitestgehend unbekannt.

Sanitäre Einrichtungen stehen unter Tage praktisch nicht zur Verfügung. Bekannte Einrichtungen der vorstehend genannten Art lassen sich unter Tage nicht einsetzen, weil dort entweder die räumlichen Verhältnisse zu beengt sind oder eine wirtschaftliche und hygienische Entsorgung nicht möglich ist.

Die Erfindung soll auch insoweit Abhilfe - schaffen und damit derartige sanitäre Einrichtungen auch völlig neuen Anwendungsbereichen zugänglich machen.

Eine erfindungsgemäße mobile Toilette ist durch folgende Merkmale gekennzeichnet:

a) Sie weist einen nach oben offenen Auffangbehälter für Fäkalien auf.

b) Der Auffangbehälter ist an seinem offenen Ende über einen lösbaren, mit einer Mittenöffnung versehenen Deckel verschließbar.

c) Die Mittenöffnung des Deckels wiederum ist über eine lösbare Kappe abdichtbar.

Der Erfindung liegt die Erkenntnis zugrunde, daß einerseits, insbesondere zur Reinigung, eine leichte Zugänglichkeit sämtlicher Flächen und umschlossenen Bereiche der Toilette gegeben sein muß, andererseits aber auch eine hermetische Abdichtung, insbesondere zum Transport einer mit Fäkalien gefüllten Toilette, gewährleistet sein muß.

Darüber hinaus soll die Möglichkeit des Verschließens der Toilette auch Geruchsbelästigungen vorbeugen.

Weiterhin steht aufgrund der erfindungsgemäßen Konstruktion eine besonders kompakte Toilettenanlage zur Verfügung, die auch unter extremen räumlichen Verhältnissen überall eingesetzt werden kann, und deren Entsorgung in der Regel dezentral erfolgen wird. Dies kann beispielsweise im Bergbaubereich wie folgt geschehen: Nachdem die Toilette einen gewissen Füllungsgrad an Fäkalien aufweist, wird sie abgedichtet und verschlossen, was aufgrund der erfindungsgemäßen Konstruktion ohne weiteres schnell, einfach und hygienisch möglich ist. Anschließend wird die komplette, gefüllte Toilette über entsprechende Fördereinrichtungen nach über Tage transportiert. Dort wird die Toilette wieder geöffnet, indem die Kappe und/oder der Deckel aufgeklappt oder abgenommen werden. Die Fäkalien werden ausgeschüttet, und die Toilette oder ihre Bauteile werden anschließend gereinigt. Dabei kann sowohl das Öffnen, als auch Ausschütten sowie das Reinigen vollautomatisch in einer entsprechenden Entsorgungs und Reinigungskammer erfolgen, ohne daß es irgendwelcher manueller Handgriffe bedarf.

Sowohl zur Vereinfachung der manuellen Handhabbarkeit, aber auch, um die Toilettenanlage einer automatischen Entsorgung zugänglich zu machen, sieht die Erfindung verschiedene vorteilhafte Ausgestaltungen vor.

Nach einer ersten Variante sind der Deckel und der Auffangbehälter an ihren korrespondierenden Endbereichen mit zueinander parallelen Flanschrändern ausgebildet. Diese geo metrische Gestaltung ermöglicht besonders einfache Herstellungs-und Verbindungsmöglichkeiten der Teile untereinander.

Gemäß einer weiteren vorteilhaften Ausführungsform sind die Flanschränder dann über Schrauben, Klammern oder dergleichen lösbar miteinander verbunden. Beispielsweise können am Deckel und/oder Auffangbehälter Klammern befestigt sein, die so gestaltet sind, daß sie den korrespondierenden Rand des anderen Teils unter-beziehungsweise übergreifen und festhalten. In der Entsorgungsanlage können die Klammern dann leicht manuell oder über entsprechende mechanische Greiferarme geöffnet werden. Zwischen den korrespondierenden Randbereichen kann weiter eine Dichtung eingelegt sein.

Es ist aber auch möglich, die Flanschränder mit korrespondierenden, ineinander dichtend eingreifenden Nut-Feder-Profilen auszubilden. Derartige Nut-Feder-Profile sind bekannt, so zum Beispiel aus der deutschen Offenlegungsschrift 29 37 630 oder dem deutschen Patent 27 49 874. Auch dabei kann unmittelbar ein Dichtungsstreifen mit vorgesehen werden. Die Abdichtung soll erfindungsgemäß so erfolgen, daß weder Gase, noch Flüssigkeiten, noch Feststoffe austreten können.

Eine weitere erfindungsgemäße Ausführungsvariante sieht vor, daß die korrespondierenden Endbereiche von Deckel und Auffangbehälter übergreifend beziehungsweise hintergreifend ausgebildet sind. Dabei können durch entsprechende Rastvor-und -rücksprünge in den korrespondierenden Teilen auch unmittelbar wieder mechanische Verbindungen zwischen den Teilen geschaffen werden. Gegebenenfalls können aber auch bei dieser Ausführungsform zusätzliche Verbindungselemente, wie Schrauben, Klammern oder dergleichen vorgesehen werden.

Die Verbindung von Deckel und Auffangbehälter kann nach einer bevorzugten Ausführungsvariante der Erfindung auch so erfolgen, daß die vorstehend genannten Verbindungen nur über einen Teilbereich der korrespondierenden Abschnitte verlaufen, während über einen anderen Teilbereich eine schwenkbare Verbindung geschaffen wird. Diese kann beispielsweise so gestaltet sein, daß Deckel und Auffangbehälter über den schwenkbaren Abschnitt einstückig, das heißt materialschlüssig miteinander verbunden sind; es können aber auch entsprechende Scharniere vorgesehen sein.

Die Erfindung umfaßt daneben aber auch sonstige Verbindungsformen zwischen Auffangbehälter und Deckel. So können zum Beispiel bei der Ausführungsform mit übergreifenden beziehungsweise hintergreifenden Abschnitten diese mit korrespondierenden Gewinden ausgebildet sein, so daß der Deckel quasi auf den Auffangbehälter aufgeschraubt wird.

Neben den erfindungsgemäßen Verbindungsformen zwischen Auffangbehälter und Deckel werden zur Verbindung von Kappe und Deckel gemäß verschiedenen bevorzugten Ausführungsformen der Erfindung weitere Maßnahmen vorgeschlagen. So sieht eine Ausführungsvariante vor, daß die Kappe auf dem Deckel verschiebbar und über die Mittenöffnung aufschiebbar angeordnet ist. Der Deckel kann so weder verlorengehen, noch ohne weiteres entwendet werden, sofern entsprechende Endanschläge auf dem Schienenweg vorgesehen sind. Zur späteren Reinigung können die Endanschläge, die beispielsweise aus senkrecht zur Schienenrichtung eindrückbaren Stiften bestehen können, entnommen werden. Dabei ist nach einer bevorzugten Ausführungsform vorgesehen, die Stifte als Magneten auszu führen, die in der Entsorgungszentrale später über entsprechende Gegenmagnete abgezogen werden können.

Die Kappe kann aber auch, ähnlich wie bei einer konventionellen Klobrille, schwenkbar am Deckel angeordnet sein. Die Abdichtung zwischen Kappe und Deckel kann beispielsweise dadurch erfolgen, daß die Kappe mit einem von der Grundfläche senkrecht abstehenden umlaufenden Rand ausgebildet ist, in dem eine Dichtschnur einliegt, die dann nach Verschließen der Kappe auf dem Deckelbereich um die Mittenöffnung aufliegt. Eine Verankerung von Kappe und Deckel erfolgt dann beispielsweise wieder durch geeignete Klammer, Schrauben oder dergleichen.

Eine weitere vorteilhafte Ausführungsform der Erfindung sieht vor, daß der Bereich zwischen der Mittenöffnung des Deckels der Toilette und dem Boden des Auffangbehälters als Freifallstrecke ausgebildet ist, das heißt zumindest in diesem Bereich keine Zwischendecken oder dergleichen eingezogen sind. Diese, entgegen den eingangs beschriebenen Toilettenanlagen nach dem Stand der Technik getroffene Maßnahme bewirkt, daß oberhalb der auf dem Boden des Auffangbehälters zur Auflage kommenden Fäkalien ein maximaler Luftbereich stets vorhanden ist, der eine Desinfektionswirkung besitzt.

Insbesondere unter dem Blickwinkel eines Einsatzes einer erfindungsgemäßen mobilen Toilette im Bergbaubereich, aber auch für besonders kritische Anwendungen, wie beispielsweise im Flugzeug, sieht eine bevorzugte Ausgestaltung der Erfindung vor, daß die Bauteile der Toilette aus einem antistatischen Material bestehen. Dies können beispielsweise mit Antistatika versetzte Kunststoffe sein, zum Beispiel graphitisierte glasfaserverstärkte Kunststoffe. Es kann so jede Funkenbildung durch statische Aufladung vermieden werden, was insbesondere zur Verhinderung von Explosionen unter Tage äußerst wichtig ist.

Weiterhin sieht eine bevorzugte Ausführungsvariante der Erfindung vor, daß am Deckel und/oder Auffangbehälter der Toilette Befestigungseinrichtungen angeordnet sind, damit die komplette Toilette beispielsweise an untertätig eingesetzten Laufketten aufgehängt werden kann. Die Befestigungselemente können dabei zum Beispiel einfache Haken sein.

Weitere vorteilhafte Ausgestaltungen der Erfindung sind durch die weiteren Patentansprüche sowie die übrigen Anmeldungsunterlagen beschrieben. Die Erfindung wird nachstehend anhand einer insbesondere für den Einsatz im Bergbau geeigneten Toilette beschrieben. Der Einsatz ist aber nicht insoweit beschränkt, weitere Anwendungsbereich ergeben sich beispielsweise im Tunnelbau, in Campingfahrzeugen, Bussen, Flugzeugen und überall dort, wo besonders beengte Verhältnisse vorliegen beziehungsweise eine besonders leichte Handhabbarkeit gewährleistet sein muß.

Die Zeichnung zeigt gemäß

Figur 1: Einen vertikalen Längsschnitt in Längsrichtung einer erfindungsgemäßen mobilen Toilette

Figur 2: Eine Aufsicht auf die Toilette nach Figur 1

Figur 3: Einen vertikalen Längsschnitt in Querrichtung durch die Toilette nach den Figuren 1, 2

Figur 4: Eine weitere Ausführungsform einer erfindungsgemäßen Toilette im Längsschnitt.

Eine erfindungsgemäße mobile Toilette besteht aus einem Auffangbehälter 10, einem diesen verschließenden Deckel 12 sowie einer Kappe 14, die selbst wiederum zum Verschließen einer im Deckel 12 angeordneten Mittenöffnung 16 dient.

Der Auffangbehälter 10 hat im wesentlichen eine wannenähnliche Form und weist einen geschlossenen Boden 18 mit sich daran anschließenden geschlossenen Seitenwänden 20a-d auf.

Vom Boden 18 stehen im Abstand zueinander zwei in Querrichtung der Toilette verlaufende Kufen 22,24 nach unten vor. Die Kufen dienen einerseits zum Aufstellen der Toilette, andererseits aber auch als Transport-oder Gleitschienen beim ziehenden oder schiebenden Vortransport. Ferner ist es möglich, die Kufen 22,24 so anzuordnen beziehungsweise auszurichten, daß die gesamte Toilette auf geeignete Wagen, zum Beispiel beim Transport unter Tage, ortsfest aufgesetzt werden kann.

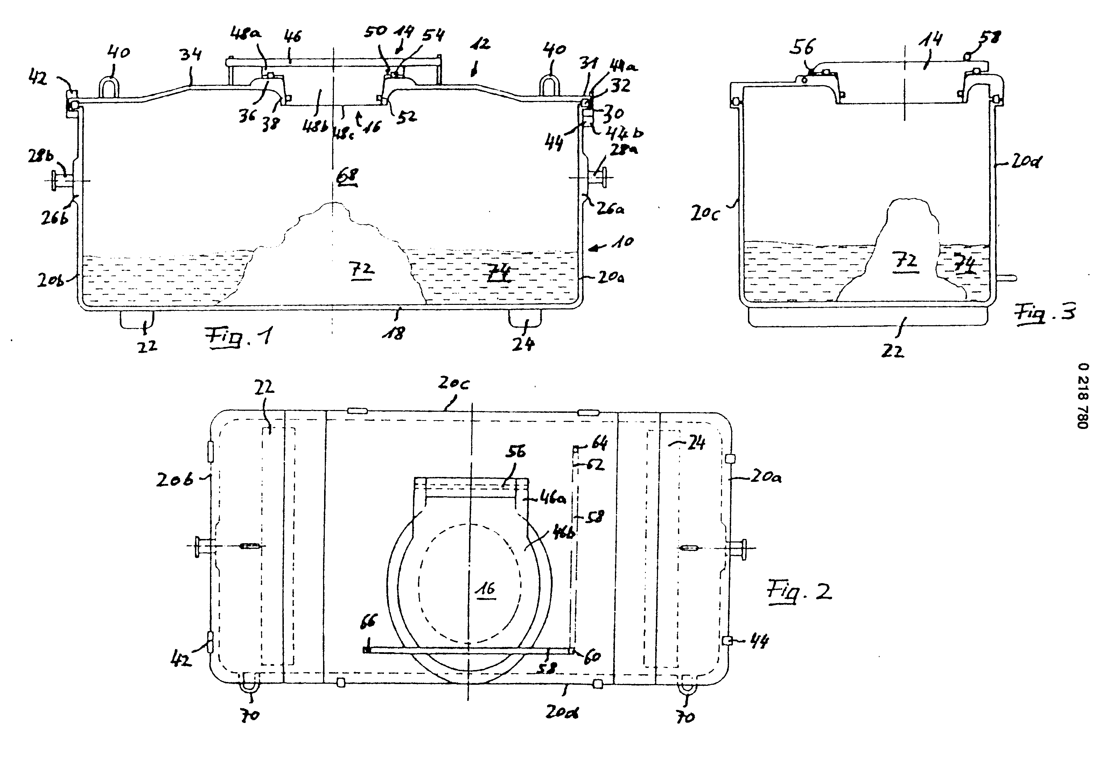

Wie die Figuren 1 und 2 erkennen lassen, sind die schmalen Seitenwände 20a,b etwa auf 2/3 ihrer Höhe (vom Boden aus gerechnet) mittig mit jeweils einer kreisförmigen Wandverstärkung 26a,b ausgebildet, die zur Aufnahme von Zapfen 28a,b dienen, die von den Wandverstärkungen 26a,b senkrecht nach außen vorstehen. Die Zapfen 28a,b dienen als Befestigungs-beziehungsweise Transportzapfen, über die die mobile Toilette an entsprechend Transporteinrichtungen, zum Beispiel untertägige Einschienenbahnen angeschlagen und über diese transportiert werden kann.

Im oberen freien Endbereich sind die Seitenwände 20a,b,c,d mit einem etwa senkrecht nach außen vorstehenden Flansch 30 ausgebildet. Der Flansch 30 weist oberseitig eine umlaufende Nut - (ohne Bezugszeichen dargestellt) auf, in der ein Dichtungsstreifen 32 einliegt. Der Dichtungsstreifen 32 liegt weiterhin in einer korrespondierenden Nut - (wieder ohne Bezugszeichen dargestellt) auf der Unterseite des Randbereiches 31 des Deckels 12 ein, wie sich insbesondere aus Figur 1 ergibt. Figure1 ist auch zu entnehmen, daß die Außenabmessungen des Deckels 12 denen des Auffangbehälters 10 beziehungsweise des zugehörigen Flansches 30 entsprechen.

Der Deckel 12 hat im wesentlichen eine flächige Form und ist lediglich in Richtung auf seine Mittenöffnung 16 mit einer Überhöhung 34 ausgebildet. Während die Wandstärke des Deckels 12 im wesentlichen der des Auffangbehälters 10 entspricht, ist der Randbereich um die Mittenöffnung 16 mit einer weiteren Überhöhung 36 und materialverstärkt sowie mit einem nach unten, in Richtung auf den Auffangbehälter 10 leicht konisch zulaufenden Ringabschnitt 38 gestaltet. Wie sich Figur 2 entnehmen läßt, weist die Mittenöffnung 16 eine etwa ovale Form auf; entsprechend ist auch der Ringabschnitt 38 oval geformt.

Auf seiner Oberfläche weist der Deckel 12 etwa auf der Mitte der Schmalseiten 20a,b im Abstand zum Rand beidseitig der Mittenöffnung 16 jeweils einen Befestigungshaken (Ringöse) 40 für geeignete Transportmittel auf.

Deckel 12 und Auffangbehälter 10 sind miteinander mit über den Rand (Flansch) aufgesetzten Klammern 42 oder Schnappverschlüssen 44 dichtend verbunden. Die im Bereich der linken Seitenwand 20b sowie der rückseitigen Längswand 20c vorgesehenen Klammern 42 bestehen, wie sich insbesondere Figur 1 entnehmen läßt, aus U-förmig gestalteten Elementen, die nach Aufdrücken des Deckels 12 auf den Flansch 30 unter Zusammenpressen der dazwischen einliegenden Dichtung 32 aufgesetzt sind. Die Schnappverschlüsse 44 bestehen aus einer L-förmig gestalteten Klammer, wobei der längere Schenkel 44a am Deckel 12 drehbar angelenkt ist, während der kürzere Schenkel 44b nach Aufdrücken des Deckels 12 auf den Flansch 30 unter diesen geführt und dort festgelegt wird.

Anstelle der Klammern 42 beziehungsweise Schnappverschlüsse 44 können selbstverständlich erfindungsgemäß auch andere bekannte Verbindungen vorgesehen werden, zum Beispiel Schraubverschlüsse, Nieten, Nut-Feder-Profile oder dergleichen. Wichtig ist nur, daß eine Verbindung zur Verfügung gestellt wird, die auch wieder leicht lösbar ist, wie nachfolgend noch erläutert wird.

Zum Verschließen und Abdichten der Mittenöffnung 16 ist die Kappe 14 vorgesehen. Diese besteht aus einer Platte 46, deren Grundfläche sich am besten Figur 2 entnehmen läßt. Die Platte 46 weist an ihrem hinteren, der Wand 20c zugewendeten Ende einen rechteckigen ersten Abschnitt 46a auf, an den sich eine zweiter, teilovaler Abschnitt 46b anschließt, der die ovale Mittenöffnung 16 allseitig überdeckt. Von der Unterseite der Platte 46 erstreckt sich ein Vorsprung 48 in Richtung auf die Mittenöffnung 16. Der Vorsprung 48 weist einen ersten ovalen Abschnitt 48a auf, dessen Durchmesser größer sind als die der Mittenöffnung 16, jedoch kleiner als die Außenabmessungen der Überhöhung 36. Der erste Abschnitt 48a ist im Abstand zur Platte 46 mit einem Rücksprung 50 ausgebildet, an den sich eine zweiter Abschnitt 48b anschließt. Der Abschnitt 48a weist gleichfalls eine ovale Form auf, und seine Außenabmessungen sind geringfügig kleiner als die Innenabmessungen der Mittenöffnung 16. Auf seiner zum freien Ende hin leicht konischen Umfangsfläche weist der zweite Abschnitt 48b umlaufend eine Ringnut auf, in der ein Dichtungsstreifen 52 einliegt. Auch der erste Abschnitt 48a ist an seiner Unterseite mit einer umlaufenden Ringnut ausgebildet, in der gleichfalls ein Dichtungsstreifen 54 einliegt. Die Abmessungen der Bauteile der Kappe 14 sind so abgestimmt, daß, wenn die Kappe 14 auf die Mittenöffnung 16 aufgesetzt wird, die Kappe 14 die Mittenöffnung 16 dichtend abschließt, und zwar hier insbesondere über die Dichtungsstreifen 52,54, die zusätzliche Abdichtungen gegenüber den zugehörigen Dichtflächen (Ringsabschnitt 38, Umfangsfläche des zweiten Abschnittes 48b des Vorsprunges 48 beziehungsweise Unterseite des ersten Abschnittes 48a des Vorsprungs 48, Oberseite der Überhöhung 36) schaffen.

Wie sich Figur 1 entnehmen läßt, weist der zweite Abschnitt 48b des Vorsprungs 48 eine derartige Bauhöhe auf, daß in geschlossenem Zustand der Kappe 14 seine Stirnfläche 48c mit der Stirnfläche des Ringabschnittes 38 fluchtet.

Am freien Ende des rechteckigen Plattenabschnitts 46a ist die Kappe 14 über ein Scharnier 56 klappbar am Deckel 12 angelenkt.

Parallel zu den Schmalseiten 20a,b verläuft (in der Aufsicht gemäß Figur 2) rechts von der Kappe 14 eine Schiene 58, die an ihrem der Wand 20d zugewandten Ende über einen senkrecht vom Deckel 12 abstehenden Stift 60 drehbar geführt und an ihrem gegenüberliegenden Ende 62 auf einen weiteren Stift 64 aufklemmbar ist.

In Figur 2 ist strichpunktiert die Ausgangslage der Schiene 58 mit den Stiften 60,64 dargestellt.

Die Schiene 58 kann dann um den Stift 60 herum in eine Lage verschwenkt werden, in der sie im wesentlichen parallel zur vorderen Seitenwand 20d verläuft. Dort wird das Ende 62 der Schiene 58 auf einem weiteren Stift 66 festgeklemmt.

Während die Schiene 58 in der Ausgangslage neben der Kappe 14 verläuft, ist ihre in Figur 2 verschwenkte Stellung so, daß die Schiene 58 die Platte 46 der Kappe 14 in ihrem vorderen Abschnitt übergreift und unter Anpreßdruck gegen den Deckel 12 spannt. Zu diesem Zweck kann der Stift 66 auch als Haken ausgebildet werden, mit dem die Schiene 58 festgeklemmt wird.

Mittels dieser einfachen Einrichtung (Schiene 58) ist es ohne weiteres möglich, die Kappe 14 - (also den Toilettendeckel) gegenüber dem Deckel 12 des Auffangbehälters 10 (dichtend, und zwar über die Dichtstreifen 52, 54) festzulegen. Durch einfaches Verschwenken der Schiene 58 in die Ausgangsstellung (in Figur 2 gestrichelt dargestellt) wird die Kappe 14 wieder freigegeben und kann über das Scharnier 56 ohne weiteres leicht aufgeklappt werden, um die Toilette zur Benutzung freizugeben.

Wie Figur 2 zu entnehmen ist, sind weiterhin an der Vorderseite 20d des Auffangbehälters 10 zwei im Abstand zueinander angeordnete Ösen 70 angeordnet, die gleichfalls zum Transport der Toilette dienen.

Die erfindungsgemäße Toilette ist bewußt ohne im Auffangbehälter 10 vorgesehene Zwischenwände und/oder Schieber ausgerüstet, um eine Freifallstrecke 68 zwischen der Mittenöffnung 16 im Deckel 12 und dem Boden 18 des Auffangbehälters 10 zu schaffen. Hierdurch wird eine Luftschicht zwischen den im Auffangbehälter 10 aufgenommenen Fäkalien 72 und der Mittenöffnung 16 geschaffen, die desinfizierend wirkt. Auch ein Bakterientransport über den Boden 18 beziehungsweise die Seitenwände 20a,b,c,d nach außen ist ausgeschlossen, sofern -wie Figur 1 zeigt -der Auffangbehälter 10 im übrigen mit einer handelsüblichen Desinfektionslösung 74 gefüllt ist.

Erfindungsgemäß ist vorgesehen, die Toilette beispielsweise aus Kunststoffmaterialien herzustellen, um sie insbesondere leicht auszuführen und damit leicht transportierbar zu machen. Dabei sieht eine vorteilhafte Ausgestaltung der Erfindung vor, daß ein antistatisches Kunststoffmaterial verwendet wird, um insbesondere auch beim Einsatz der Toilette im untertägigen Bereich jedwede Funkenbildung und damit Explosionsgefahr auszuschließen. Die Toilette kann aber ebenso aus einem rostfreien Stahl oder sonstigen Materialien ausgeführt sein.

Zum Einsatz im Bergbau wird eine erfindungsgemäße (leere) Toilette über übliche Transportwege nach unter Tage befördert und dort aufgestellt. Nach Lösen der Schiene 58 wird die Kappe 14 aufgeklappt und über die Mittenöffnung 16 eine Desinfektionslösung in den Auffangbehälter 10 eingegossen. Die Toilette steht danach zur Benutzung frei und kann nach jeder Benutzung (vorläufig) verschlossen werden, indem die Kappe 14 über das Scharnier 56 auf die Mittenöffnung 16 auf-beziehungsweise eingesetzt wird. Über die Dichtungsstreifen 52,54 ist so bereits eine Abdichtung, insbesondere Geruchsabdichtung, gewährleistet.

Nachdem der Auffangbehälter 10 einen gewissen Füllungsgrad an Fäkalien 72 erreicht hat, wird die Toilette (endgültig) verschlossen, indem die Schiene 58 in die in Figur 2 dargestellte Schließstellung über die Kappe 14 verschwenkt und dort festgelegt wird. Die erfindungsgemäße Toilette stellt dann eine allseits hermetisch abgeschlossene Einheit dar. Sie wird dann komplett wieder nach über Tage transportiert, wozu insbesondere die stirnseitigen Zapfen 28a,b hilfreich sind, die einen unmittelbaren Anschlag an den unter Tage üblichen Einschienenbahnen ermöglichen. Darüber hinaus sieht die Erfindung vor, die Abmessungen der erfindungsgemäßen Toilette so zu gestalten, daß ein oder mehrere Toiletten in die unter Tage üblichen Container raumfüllend eingesetzt werden können, so daß ihr Transport nach über Tage auch in diesen Containern erfolgen kann.

Nachdem die Toilette über Tage abgesetzt wurde, wird sie wie folgt entsorgt:

In einer Reinigungszelle werden Kappe 14 und Deckel 12 durch Lösen der Schiene 58 beziehungsweise Deckel 12 und Auffangbehälter 10 durch Lösen der Klammern 42 beziehungsweise Schnappverschlüsse 44 gegeneinander freigelegt. Die Fäkalien beziehungsweise die Desinfektionslösung können ausgeschüttet werden, und die einzelnen Bauteile der Toilette werden dann beispielsweise über eine Hochdruck-Wassersprühanlage gereinigt. Dabei kann sowohl das Öffnen des Auffangbehälters 10, als auch seine Entleerung automatisch erfolgen. Beispielsweise können, insbesondere bei genormten Abmessungen, die seitlichen Klammern 42 beziehungsweise Schnappverschlüsse 44 durch entsprechende Greiferarme leicht gelöst werden, woraufhin der Auffangbehälter 10 über eine entsprechende Hubeinrichtung umgestülpt wird.

Es ist weiterhin auch möglich, den geöffneten Auffangbehälter 10, beispielsweise auf einer Rundstrecke, an einer Schienenbahn anzuschlagen und entlang des Transportweges der Schienenbahn dann zu reinigen. Dazu ist es vorteilhaft, wenn Deckel 12 und Auffangbehälter 10 zumindest an einer Seite verschwenkbar miteinander verbunden sind, so daß die komplette Einheit beispielsweise über eine der Ringösen 40 an der Schienenbahn aufgehängt wird. Es kann dann ohne weiteres mit einer Reinigungseinrichtung gleichzeitig der Deckel 12, der Bereich der Mittenöffnung 16 - (gegebenenfalls bei aufgeklappter Kappe 14) sowie natürlich der Auffangbehälter 10 selbst gereinigt werden.

Alles dies kann vollautomatisch erfolgen, ohne daß manuelle Eingriffe notwendig wären.

Die Toilette wird nach der Reinigung dann getrocknet, wieder verschlossen und nach unter Tage zurückgeführt.

Durch die erfindungsgemäße Gestaltung entfällt die Notwendigkeit einer Entsorgung vor Ort, vielmehr ist es durch die erfindungsgemäße Konstruktion möglich, die Toilette leicht, auch unter Tage zu transportieren und so einer leichten und hygienischen Reinigung über Tage zugänglich zu machen. Auch die Hygiene unter Tage ist jederzeit gewährleistet.

Selbstverständlich ist die erfindungsgemäße Toilette nicht auf den Anwendungsbereich unter Tage beschränkt, wenngleich dort besonders bevorzugt. Sie kann auch über Tage eingesetzt werden, vorzugsweise dort, wo besonders beengte Raumverhältnisse herrschen.

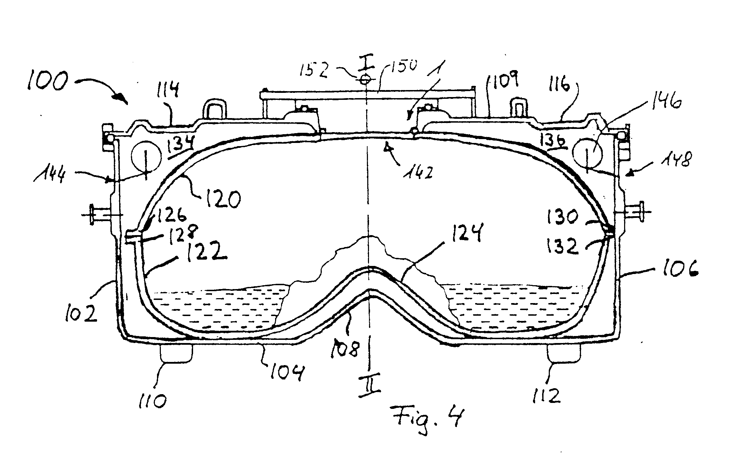

Bei einer besonders vorteilhaften bevorzugten Ausführungsform, die in Figur 4 dargestellt ist, wobei nur die von den Ausführungsformen gemäß Figuren 1 bis 3 unterschiedlichen Teile mit Bezugsziffern belegt sind, ist die mobile Toilette mehrschalig ausgeführt.

Figur 4 zeigt eine mobile Toilette 100, die eine Außenschale und einen darin aufgenommenen inneren Fäkalienbehälter aufweist. Von dem Außenbehälter sind eine Seitenwand 102, ein daran anschließender Boden 104 mit einem einwärts gestülpten Bodenabschnitt 108, der noch eingehender besprochen wird, und eine sich an den Boden 104 auf der der Seitenwand 102 gegenüberliegenden Seite anschließende Seitenwand 106 dargestellt. Nach oben wird der Außenbehälter 102, 104, 108, 106 durch einen separaten Deckel 109 verschlossen.

Ein im Inneren des Außenbehälters aufgenommener Fäkalienauffangbehälter weist in seinem Inneren auch dort, wo bei den Ausführungsformen nach Figuren 1 bis 3 mehr oder weniger scharfe Kanten verlaufen, abgerundet verlaufende Flächen auf. Hierdurch läßt sich eine einfachere und wirkungsvollere (im einzelnen zuvor beschriebene) Reinigung des Fäkalienbehälters nach dessen Entleerung erreichen, da sich erstens an derartig abgerundeten Flächen Fäkalien oder Fremdkörper weniger leicht festsetzen und zweitens mit einem Sprühstrahl bei der Entsorgung/Reinigung die Rundungen besser abspritzen lassen.

Der Fäkalienbehälter kann grundsätzliche einstückig ausgeführt sein. Bei der in Figur 4 dargestellten bevorzugten Ausführungsform ist jedoch eine herstellungstechnisch besonders vorteilhafte zweistückige Ausführungsform gezeigt; diese zweistückige Form (der Innenbehälter kann dabei sowohl -wie dargestellt horizontal-als vertikal geteilt sein) empfiehlt sich besonders dann, wenn der Fäkalienbehälter aus Kunststoff (z.B. Polyäthylen oder Polyvinylchlorid) im Tiefziehverfahren gefertigt werden soll. Der dargestellte Fäkalienbehälter weist eine Oberschale 120 und eine Unterschale 122 auf. Die Unterschale ist korrespondierend zur Einstülpung 108 des Bodens 104 der Außenschale mit einer Einstülpung 124 versehen. Die Oberschale 120 weist einen Rand auf, von dem in der Schnittdarstellung der Figur 4 ein linker Flanschbereich 126 und ein rechter Flanschbereich 130 erkennbar sind. Die Flansche 126, 130 erstrecken sich hierbei jeweils von der Oberschale 120 aus nach außen.

Korrespondierend hierzu sind an der Unterschale 122, 124 Flansche 128 (links) und 132 - (rechts) ausgebildet, die sich ebenfalls von der Schale aus nach außen erstrecken. Mittels der umlaufenden Flansche werden die Oberschale 120 und die Unterschale 122 aneinander festgelegt und, beispielswiese durch Schweißung, dichtend miteinander verbunden. Im einzelnen wird also der Flanschbereich 126 mit dem Flanschbereich 128 bzw. der Flanschbereich 130 mit dem Flanschbereich 132 (die Flanschbereiche entstehen herstellungsbedingt automatisch beim Tiefziehen) verschweißt, wobei darauf zu achten ist, daß an der Innenseite des so entstehenden Fäkalienbehälters 120, 122, 124 entlang der umlaufenden Schweißnaht eine glatte Oberfläche ausgebildet wird. Mittig weist der Oberschale 120 unterhalb der Öffnung 140 im Deckel 109 eine korrespondierende Öffnung 142 zum Fäkaliendurchtritt auf.

Wie in Figur 4 deutlich erkennbar ist, verlaufen die Oberschale 120 und die Unterschale 122 im wesentlichen, insbesondere entlang der Seitenflächen 102, 106 des Außenbehälters, bogenförmig, so daß sich zusammen mit der Einstülpung 124 in der Schnittdarstellung die Form eines Brillengestells ergibt. Dies hat mehrere Vorteile zur Folge.

Im Bereich zwischen Deckel 109 bzw. dem oberen Bereich der Seitenwände 102, 106 und der Oberschale 120 entstehen so Hohlräume 134, 136 die beispielsweise über in der Vorderwand ( nicht dargestellt ) angeordnete Klappen zugänglich sind. Es erweist sich als besonders vorteilhaft, wenn beispielsweise in dem einen Hohlraum 134 ein Vorrat von Toilettenpapier, zum Beispiel eine Toilettenpapierrolle auf einem üblichen Abrollhalter, vorgesehen wird. Die Rolle kann über die (nicht dargestellten) Klappen eingeführt und das Papier kann über einen in der Seitenwand 102 angeordneten Schlitz 144 seitlich vom Benutzer abgezogen werden. Es sind auch mehrere Toilettenpapierrollen hintereinander anordbar. In dem anderen Hohlraum 136 läßt sich zum Beispiel in vorteilhafter Weise ein Vorrat an mit einem desinfizierenden Mittel behandelten, beispielsweise mit Alkohol getränkten Tüchen, etwa Papiertüchern ( oder Papierrollen 145 wie dargestellt) aufbewahren. Eine Entnahme ist gleichfalls wieder über einen Schlitz 148 in der rechten Seitenwand 106 möglich. Toilettenpapier und/oder Reinigungstücher sind bei Nichtgebrauch durch die erfindungsgemäße Anordnung sicher vor Schmutz und unberechtigter Entnahme geschützt. Da bei mobilen Toiletten, insbesondere im Untertagebereich, nicht immer eine Wasserversorgung zur Reinigung der Hände eines Benutzers zur Verfügung gestellt werden kann, wird mittels der mit Alkohol getränkten Papiertücher eine derartige Reinigung ermöglicht. Eine alternative Ausführungsform sieht vor, daß die Vorratsräume 134,136 von oben zugänglich sind und zwar -in eine besonders bevorzugten Ausführungsform - über verschließbare Klappen im Deckel 109. Es kann aber auch die im übrigen anhand der Figuren 1 bis 3 ausführlich beschriebene Kappe 150 nach rechts und links bis zu den Seitenwänden 102, 106 verlängert werden. Dann sind im Deckel 109 Aussparungen im Bereich der Toilettenpapierrolle bzw. des Papiervorrats vorgesehen, über die der Benutzer nach Wegklappen des Deckels 109 an die Reinigungsmittel gelangt. Ein Raum für die Reinigungsmittel kann aber alternativ auch durch entsprechende Sicken (nicht dargestellt, aber zum Beispiel dort, wo in Figur 4 Einbuchtungen 114, 116 dargestellt sind) gebildet werden. Die Beschickung mit und Benutzung der Reinigungsmittel (Toilettenpapier, Reinigungstücher) kann dann besonders einfach erfolgen und ein Schutz gegen Entnahme und Verschmutzung ist in diesem Fall durch die vergrößerte Kappe 150 gegeben.

Die in Figur 4 dargestellte mobile Toilette weist noch weitere Vorteile auf. Am Boden 104 sind zwei parallel zueinander verlaufende Kufen 100, 112 zum Abstellen der Toilette vorgesehen, die vorzugsweise neigungsverstellbar sind. Korrespondierend hierzu ist der Deckel 109 mit den genannten Sicken oder länglichen Einbuchtungen 114, 116 versehen. Jede Einbuchtung 114, 116 weist eine Ausdehnung auf, die die der Kufen 110, 112 geringfügig überschreitet. Hierdurch läßt sich erreichen, daß mehrere mobile Toiletten 100 aufeinander gestapelt werden können und hierbei durch die Aufnahme der Kufe 110 in der Einbuchtung 114 bzw. der Kufe 112 in der Einbuchtung 116 sicher festgelegt sind. Insbesondere bei den häufig unter Tage beschränkten Platzverhältnissen ist eine derartige Stapelbarkeit von großem Nutzen, aber auch sonst.

Die Einstülpung 108 des Bodens 104 dient unter anderem ebenfalls der Stapelbarkeit. Hierzu sollte die oben auf der Kappe angeordnete Schiene oder Verschlußstange 152 jedoch gemäß Figur 4 in Längsrichtung der Einstülpung 108, 124 angeordnet werden. Beim Stapeln der mobilen Toiletten 100 verläuft dann nämlich die Stange längs des Raumes, den die Einstülpung 108 freigibt. Die Einstülpung 108 kann vorteilhafterweise hierzu so ausgebildet werden, daß sie die Verschlußstange 152 relativ eng umschließt, wodurch ein besonders guter weiterer Schutz gegen seitliches Verrutschen der Toiletten 100 aufeinander gegeben ist, der über den Rutschschutz durch die Kufen 100, 112 und zugeordnete Einbuchtungen 114, 116 hinausgeht.

Die Einstülpung 124 des Fäkalienbehälters bietet mehrere Vorteile. Zunächst ist durch Ausbildung einer nach innen ragenden Spitze oder eines nach innen ragenden Wulstes, jeweils in der Mitte des Fäkalienbehälters, die zur Reinigung vorteilhafte Rundung des Fäkalienbehälters im beiden, durch die Linie I-II getrennten Teilbereichen gewährleistet. Weiterhin wird durch das geringere Volumen der abgerundeten Behälterteile weniger Desinfektionsmittel benötigt, als dies etwa bei einem kastenförmigen Behälter der Fall wäre. Schließlich kann, wenn die Außenseite der Einstülpung 124 etwa korrespondierend zur Innenseite der Einstülpung 108 des Bodens 104 des Außenbehälters verläuft, eine formschlüssige Festlegung der Unterschale 122 des Fäkalienbehälters am Boden 104 der Außenschale erfolgen; in diesem Fall können weitere Maßnahmen zur gegenseitigen Festlegung von Fäkalienbehälter und Außenschale in geringerem Umfang erfolgen oder sogar ganz entfallen, was die Herstellung der Toilette 100 verbilligt.

In gleicher Weise, wie anhand des Fäkalienbehälters beschrieben, kann auch der äußere Toilettenbehälter aus zwei tiefgezogenen Halbschalen hergestellt sein. Auch der Deckel 109 oder die Kappe 150 sind als Kunststofftiefziehteile herstellbar; ebenso, wenngleich teurer, aber selbstverständlich auch als Kunststoff-Spritzgußteile.

Die zweischalige Ausführung einer mobilen Toilette führt auch zu dem Vorteil einer erhöhten Stabilität, was insbesondere für den genannten untertägigen Einsatzzweck von großer Bedeutung ist.

Durch die besonders einfache Festlegung des Innen-und Außenbehälters gegeneinander ( unter Umständen nur über die Einstülpungen 108, 124 and ansonsten einen dichten Sitz des Innenbehälters 120,122 in der Aufnahme 102, 104, 108, 106, kann der Innenbehälter auch aus relativ dünnem Material hergestellt werden, da kaum mechanische Belastungen auf ihn einwirken. Es ist dann sogar möglich, den Einsatz (gemäß Figur 4 bestehend aus der Oberschale 120 und der Unterschale 122) als Einwegteil zu gestalten, was die Entsorgung im untertägigen Bereich zusätzlich vereinfacht und-aufgrund der preiswerten Herstellungsverfahren (Vakuum-Tiefziehen von Folien) - kaum erhöhte Kosten bedingen dürfte. Der Einsatz 120, 122 wird dann natürlich im Bereich der Öffnung 142 über einen separaten Deckel zum Transport sicher verschlossen. Hierfür bietet eine vorteilhafte Ausgestaltung der Erfindung einen als Tiefziehteil geformten Kunststoffdeckel mit umlaufendem (an sich bekanntem) als Schnappverschluß dienendem Wulst an, der die Öffnung 142 innenseitig untergreift.

## Ansprüche

1. Mobile Toilette, **gekennzeichnet durch**

a) einen nach oben offenen Auffangbehälter (10) für Fäkalien, der

b) an seinem offenen Ende über einen lösbaren, mit einer Mittenöffnung (16) versehenen Deckel (12) verschließbar ist, wobei

c) die Mittenöffnung (16) des Deckels (12) über eine lösbare Kappe (14) abdichtbar ist.

2. Toilette nach Anspruch 1, **dadurch gekennzeichnet**, daß Deckel (12) und Auffangbehälter - (10) an ihren korrespondierenden Endbereichen mit vorstehenden Flanschen (30,31) ausgebildet sind.

3. Toilette nach Anspruch 2, **dadurch gekennzeichnet**, daß die Flansche (30,31) über Schrauben, Klammern oder dergleichen lösbar miteinander verbindbar sind.

4. Toilette nach Anspruch 2 oder 3, **dadurch gekennzeichnet**, daß die Flansche (30,31) mit korrespondierenden, ineinander dichtend eingreifenden Nut-Feder-Profilen ausgebildet sind.

5. Toilette nach Anspruche 1, **dadurch gekennzeichnet**, daß die korrespondierenden Endbereiche von Deckel (12) und Auffangbehälter (10) übergreifend beziehungsweise hintergreifend ausgebildet sind.

6. Toilette nach einem der Ansprüche 1 bis 5, **dadurch gekennzeichnet**, daß Deckel (12) und Auffangbehälter (10) und/oder Deckel (12) und Kappe (14) vollständig dichtend gegeneinander verschließbar sind.

7. Toilette nach einem der Ansprüche 1 bis 6, **dadurch gekennzeichnet**, daß der Deckel (12) am Auffangbehälter (10) und/oder die Kappe (14) am Deckel (12) schwenkbar angelenkt ist (sind).

8. Toilette nach einem der Ansprüche 1 bis 7, **dadurch gekennzeichnet**, daß die Kappe (14) über die Mittenöffnung (16) aufschiebbar angeordnet ist.

9. Toilette nach einem der Ansprüche 1 bis 8, **dadurch gekennzeichnet**, daß der Deckel (12) und die Kappe (14) über eine Schraub-oder Klemmeinrichtung gegeneinander verschließbar sind.

10. Toilette nach einem der Ansprüche 1 bis 9, **dadurch gekennzeichnet** , daß die Öffnung (16) oval und mit Auflaufschrägen auf dem dem Inneren des Auffangbehälters zugewandten Randbereich ausgebildet ist, auf die eine in der Kappe (14) geführte und von außen bedienbare Sperrstange aufschiebar ist.

11. Toilette nach einem der Ansprüche 1 bis 10, **gekennzeichnet durch** einen als Freifallstrecke ausgebildeten Bereich (68) zwischen Mittenöffnung (16) des Deckels (12) und Boden (18) des Auffangbehälters (10).

12. Toilette nach einem der Ansprüche 1 bis 11, **dadurch gekennzeichnet**, daß der Auffangbehälter (10) doppelwandig ausgebildet ist und innerer Fäkalienbehälter (120, 122) und Außenbehälter (102, 104, 108, 106) zumindest teilweise im Abstand zueinander angeordnet sind.

13. Toilette nach einem der Ansprüche 1 bis 12, **dadurch gekennzeichnet**, daß der Auffangbehälter (10) oder Fäkalienbehälter (120, 122) innenseitig abgerundet ausgebildet ist.

14. Toilette nach einem der Ansprüche 1 bis 13, bei dem die einzelnen Bauteile aus einem antistatischen Material bestehen.

15. Toilette nach Anspruch 14, wobei das antistatische Material ein mit Antistatika versetzter Kunststoff ist.

16. Toilette nach Anspruch 14 oder 15, wobei das antistatische Material ein graphitisierter glasfaserverstärkter Kunststoff ist.

17. Toilette nach einem der Ansprüche 1 bis 16, **gekennzeichnet durch** mindestens eine Befestigungeinrichtung (28a, 28b, 40, 70) am Deckel - (12) und/oder Auffangbehälter (10).

18. Toilette nach Anspruch 17, **dadurch gekennzeichnet**, daß die Befestigungseinrichtung aus zwei zur Einhängung in ein Schienenbahnsystem geeigneten Zapfen (28a, 28b) besteht.

Fig. 1

Fig. 3

Fig. 2

0 218 780

Fig. 4

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 526 755 (MEYER)<br><br>* Seite 10, Zeile 27 - Seite 11, Zeile 19; Seite 13, Zeilen 14-17; Figuren 1-3 * | 1-3,5, 6,8,11, ,12 | A 47 K 11/02 |
| Y | | 4,7,9, 10,17 | |
| | --- | | |
| D,Y | DE-A-2 937 630 (SCHAEFER)<br>* Seite 15, Zeilen 15-26; Figur 1 * | 4 | |
| | --- | | |
| Y | DE-C- 162 796 (FRANKEN)<br>* Seite 1, Zeile 29 - Seite 2, Zeile 6; Figuren 1-6 * | 7,9,10 | |
| | --- | | RECHERCHIERTE SACHGEBIETE (Int. Cl.4) |
| Y | DE-C- 442 570 (BOHR)<br>* Das ganze Dokument * | 17 | A 47 K<br>E 21 F<br>B 60 R |
| A | | 1,7,11 | |
| | ----- | | |

Der vorliegende Recherchenbericht wurde für alle Patentansprüche erstellt.

| Recherchenort<br>DEN HAAG | Abschlußdatum der Recherche<br>18-12-1986 | Prüfer<br>PORWOLL H.P. |
|---|---|---|